# EUROPEAN PATENT SPECIFICATION

(11) **EP 2 632 688 B1**
(45) Date of publication and mention of the grant of the patent: **21.11.2018**
(21) Application number: 11836630.1
(22) Date of filing: 27.10.2011
(51) Int. Cl.: B29C 47/90, B29C 47/08, B29C 47/88, B29C 47/92, B29L 31/00, B29C 47/34

(54) **WETTED TYPE CALIBRATOR FOR MANUFACTURING WINDOW FRAME AND MANUFACTURING DEVICE INCLUDING THE CALIBRATOR**
FLÜSSIGKEITSBENETZTER KALIBRATOR ZUR HERSTELLUNG VON FENSTERRAHMEN UND VORRICHTUNG ZU DEREN HERSTELLUNG MIT DIESEM KALIBRATOR
ÉTALONNEUR DE TYPE HUMIDE PERMETTANT DE FABRIQUER UN CADRE DE FENÊTRE ET DISPOSITIF DE FABRICATION COMPRENANT L'ÉTALONNEUR

(30) Priority: 27.10.2010 KR 20100105308
(43) Date of publication of application: 04.09.2013
(73) Proprietor: LG Hausys, Ltd., Yeoungdeungpo-gu, Seoul 07326, (KR)
(72) Inventor: KIM, Jeong Hyeon c/o LG Hausys R&D Center,, Gangseo-gu, Seoul, 07796 (KR)
(74) Representative: Goddar, Heinz J.
(86) International application number: PCT/KR2011/008067
(87) International publication number: WO 2012/057538

(56) References cited:
- EP-A1- 0 849 066
- EP-A1- 0 925 905
- CN-Y- 2 594 001
- DE-U1- 29 822 651
- GB-A- 2 015 418
- GB-A- 2 143 770
- JP-A- 2006 056 207
- JP-A- 2010 058 364
- KR-A- 20010 044 388
- US-A1- 2004 217 509
- US-B1- 6 200 119
- US-B2- 6 401 480

## Description

### Technical Field

The present invention relates to a wetted type calibrator for manufacturing a window frame, and more particularly to a wetted type calibrator for manufacturing a window frame and a manufactruing device including the same, in which an intensive cooling system having the wetted type calibrator including multiple disk parts is disposed at a next process of an extrusion molding process so as to enhance cooling effect.

### Background Art

Generally, an extrusion-molding process, as one of synthetic resin molding methods, is to continuously form various rod, board and shape materials having the same cross sections, such as a pipe, a film, a conduit tube, an electric wire cover and a construction panel.

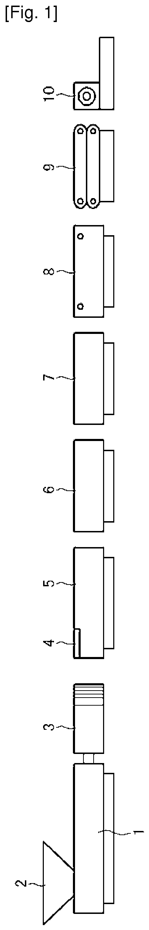

Fig. 1 is a schematic view of a general extrusion molding system. Referring to Fig. 1, If a pellet or compound type material formed of a thermoplastic material such as polystyrene, polyethylene, polypropylene and polyvinyl chloride is injected through a hopper 2 of an extruder 1, the material is heated and melted into a gel form by a heater in a heating cylinder of the extruder 1 and then transferred by a screw so as to be extruded to an extruder mold 3.

The extruded material is passed through a sizing 4 and thus is molded into a product having a pricise dimension and a predetermined shape. Then, the product is solidified by water cooling using a cooling water tank 5 or air cooling, thereby obtaining a molded product. Examples of sizing devices are disclosed in US 6 200 119 B1, EP 0 925 905 A1, EP 0 849 066 A1, GB 2 143 770 A, GB 2 015 418 A, DE 298 22 651 U1, CN 2 594 001 Y and US 2004/217509 A1.

Further, after the molding process, the molded product is passed between printing equipemnts 6, 7 which are disposed to be parrallel with each other so that a desired pattern is printed on a surface thereof, or passed through a carving machine so that a desinged pattern is carved into a surface thereof, and then cut into a desired length while it is passed through a cutter 10 by an extracting device.

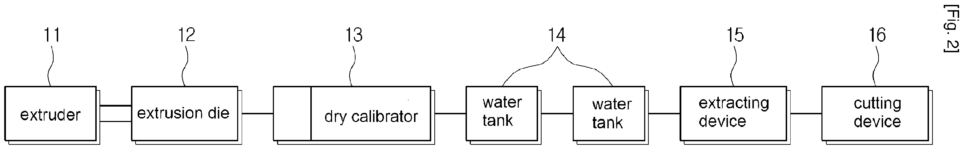

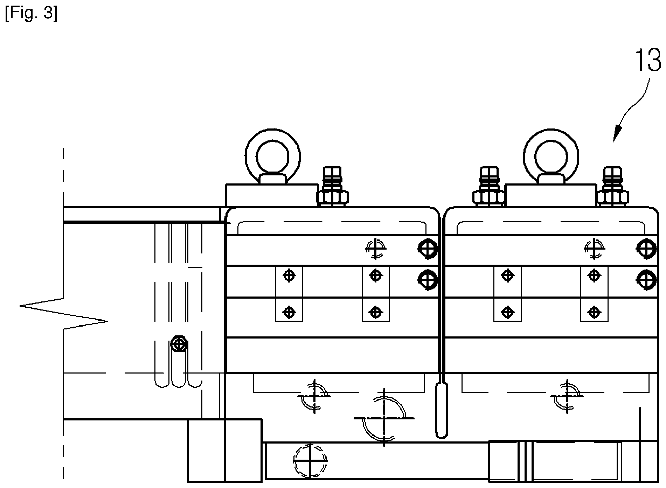

Fig. 2 is a block diagram showing a construction of a conventional apparatus for manufacturing a window frame, and Fig. 3 is a front view showing a dry calibrator in the conventional apparatus for manufacturing a window frame shown in Fig. 2.

Referring to Fig. 2, a window frmae is manufactured by an extruder 11, an extrusion die 12, a dry calibrator 13, a water tank 14, an extracting device 15 and a cutting device 16.

The extruder 11 is to heat and melt a raw mater injected through a hopper (not shown, referring to a reference numerical 2 of Fig. 1) in a heating cylinder having a heater, and at the same time to extrude the melted material to the extrusion die 12 through rotation of a screw.

The gel-state material supplied through the extruder 11 is formed into a desired shape by using the extrusion die 12.

The dry calibrator 13 functions to form a profile shape of the product passed through the extrusion die 12 and also to form the product having a precise dimension and shape.

The product passed through the calibrator 13 is cooled through the water tank 14, pulled by constant foce generated by the extracting device 15, and then cut into a desired size by the cutting device 16.

Meanwhile, referring to Fig. 3, in the above-mentioned process, the dry calibrator 13 has a structure of 235mm X 2 layers so as to supplement cooling/vacuum effect. However, since this is a cooling way through conduction, cooling effect is deteriorted. Further, an extrusion linear speed is 2.5 m/min, and this extrusion linear speed is insufficient to secure competitiveness in manufacturing a window frame.

Therefore, it is required to develop a new calibrator having high cooling effect and extrusion linear speed.

### Disclosure of Invention

### Technical Problem

An object of the present invention is to provide a wetted type calibrator for manufacturing a window frame and a manufactruing device including the same, which uses a cooling way through a convection current so that a surface of an extruded product formed of synthetic resin and is cooled first and then an inner portion thereof is cooled later, thereby promoting improvements in an extrusion linear speed.

Another object of the present invention is to provide a wetted type calibrator for manufacturing a window frame and a manufactruing device including the same, which can enhance cooling effect by using an intensive cooling system.

### Solution to Problem

To achieve the object of the present invention, the present invention provides a wetted type calibrator for manufacturing a window frame, including a houwing which accommdates a desired amount of water therein; and a calibrator assembly which is disposed in the housing so that an extruded product formed of a synthetic resin material is passed therethrough.

Preferably, the calibrator assembly comprises first and second assemblies having multiple assembled disk parts.

Preferably, the calibrator assembly comprises first and second assemblies having multiple assembled disk parts.

Preferably, the disk part includes a lower disk, a lower extrusion piece, a connection member, an upper extrusion piece and an upper disk part which are coupled in turn with each other.

Preferably, a plurality of water discharge holes are formed along a length of the upper extusion piece and the upper extrusion piece.

Preferably, an opening portion is formed among the lower extrusion piece, the connection member and the upper extrusion piece so as to be corespondent to a cross section of the extruded product.

Further, the present invention includes an extruder in which functions to a raw mater injected through a hopper is heated and melted in a heating cylinder having a heater and then the melted material is extruded by rotation of a screw; an extrusion die by which the gel-state material supplied through the extruder is formed into a desired shape; a wetted type calibrator which forms a profile shape of the product passed through the extrusion die and also forms the product having a precise dimension and shape; a water tank which cools the extruded product passed through the wetted type calibrator; an extracting device which pulls the extruded product passed through the water tank with constant foce; and a cutting device which cuts the extruded product in a desired size.

### Advantageous Effects of Invention

According to the wetted type calibrator for manufacturing a window frame and the manufactruing device including the same, it is possible to promote improvements in the extrusion linear speed by using the cooling way through a convection current so that a surface of an extruded product formed of synthetic resin and is cooled first and then an inner portion thereof is cooled later.

Further, it is also possible to enhance the cooling effect by using the intensive cooling system.

### Brief Description of Drawings

The above and other objects, fretures and advantages of the present invention will becom apparaent from the following description of preferred embodiments given in conjunction with the accompany drawings, in which:
Fig. 1 is a schematic view of a construction of a general extrusion molding system.
Fig. 2 is a block diagram showing a conventional apparatus for manufacturing a window frame.
Fig. 3 is a front view of a dry calibrator in the conventional apparatus for manufacturing the window frame of Fig. 2.
Fig. 4 is a block diagram showing a construction of an apparatus for manufacturing a window frame according to an embodiment of the present invention.
Fig. 5 is a photograph showing a state of the apparatus for manufacturing the window frame, which has a wetted type calibrator according to the present invention.
Fig. 6 is a photorgraph showing a plan view of the wetted type calibrator of Fig. 5.
Fig. 7 is a front view of the wetted type calibrator according to the present invention.
Fig. 8 is a side view of the wetted type calibrator according to the present invention.
Fig. 9 is a perspective view of the wetted type calibrator according to the present invention.
Fig. 10 is a partially cut-away perspective view of the wetted type calibrator according to the present invention.
Fig. 11 is a perspective view showing a disk part of the wetted type calibrator according to the present invention.
Figs. 12 and 13 are CAE analysis spectrums for comparing cooling effect between the conventionanl dry calibrator and the wetted calibrator of the present invention.

### [Detailed Dscription of Main Elements]

100: extruder 110: extrusion die
120: wetted type calibrator 122: housing
124: calibrator assembly 124a: first assembly
124b: second assembly 126: disk part
126a: upper disk 126b: upper extrusion piece
126c: connection member 126d: lower extrusion piece
126e: lower disk 130: water tank
140: extracting device 150: cutting device

### Best Mode for Carrying out the Invention

Hereinafter, the embodiments of the present invention will be described in detail.

The terms and words used in the description as described below are not limited to the typical or dictionary definition, and they can be interpreted as proper meanings and definitions cosistent with the technical ideas.

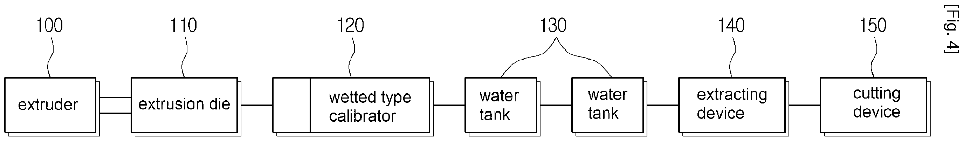

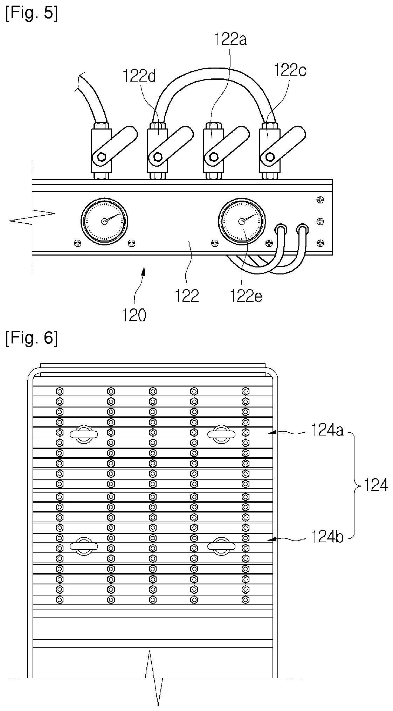

Fig. 4 is a block diagram showing a construction of an apparatus for manufacturing a window frame according to an embodiment of the present invention, Fig. 5 is a photograph showing a state of the apparatus for manufacturing the window frame, which has a wetted type calibrator according to the present invention, and Fig. 6 is a photorgraph showing a plan view of the wetted type calibrator of Fig. 5.

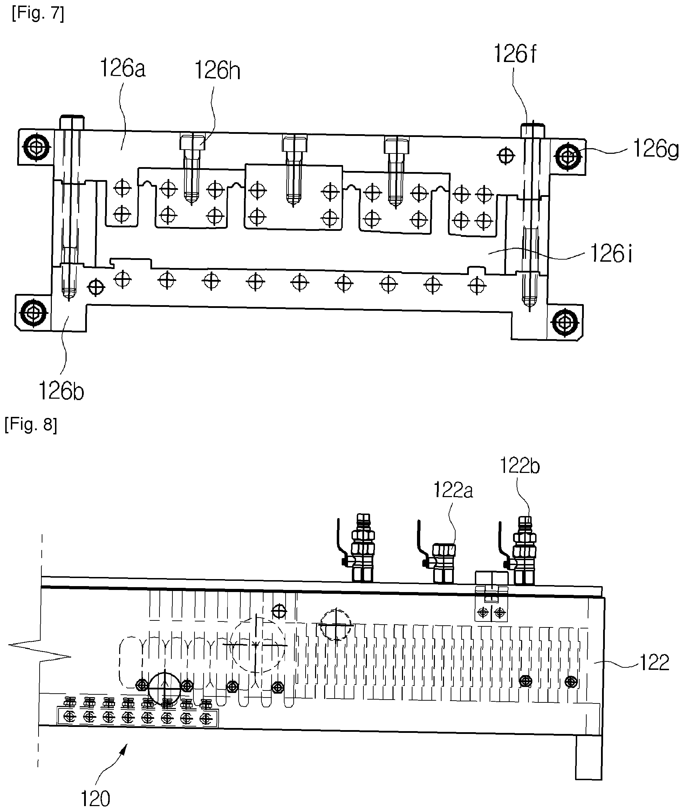

Further, Fig. 7 is a front view of the wetted type calibrator according to the present invention, and Fig. 8 is a side view of the wetted type calibrator according to the present invention.

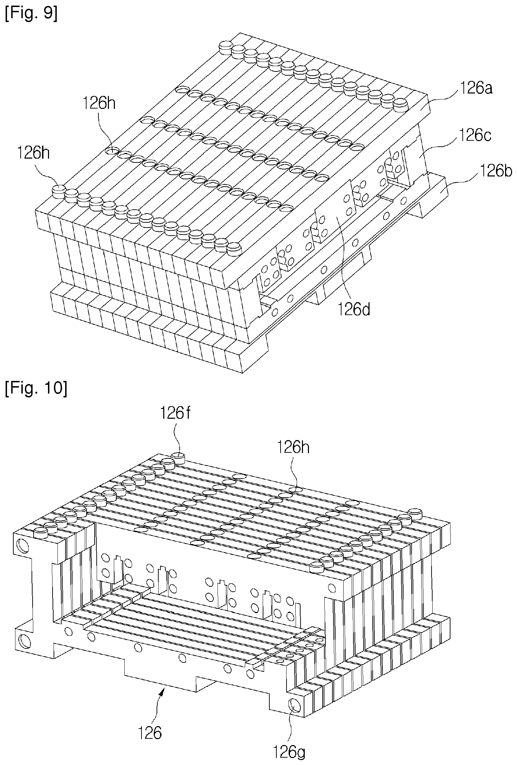

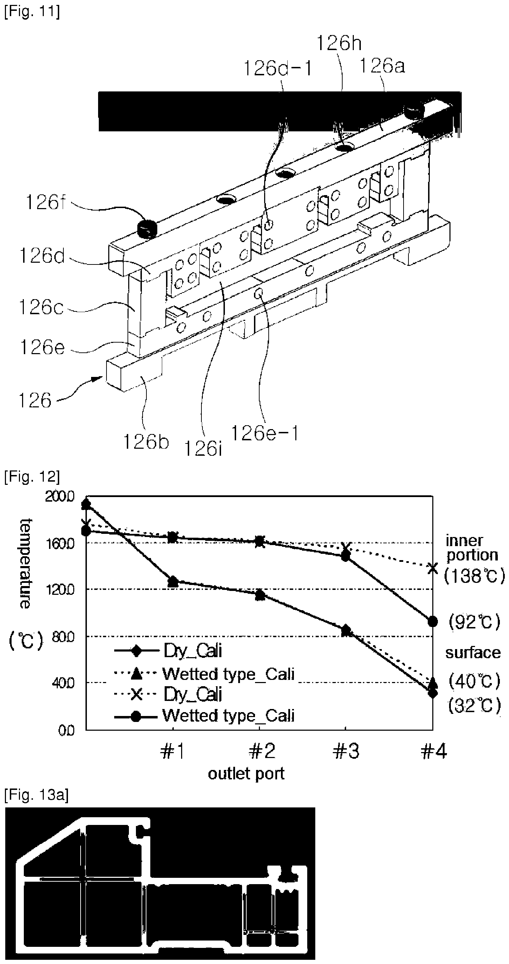

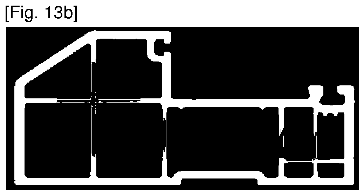

Further, Fig. 10 is a partially cut-away perspective view of the wetted type calibrator according to the present invention, Fig. 11 is a perspective view showing a disk part of the wetted type calibrator according to the present invention, and Figs. 12 and 13 are CAE analysis spectrums for comparing cooling effects between the conventionanl dry calibrator and the wetted calibrator of the present invention.

Referring to Figs. 4 and 5, an apparatus for manufacturing a window frame includes an extruder 100, an extrusion die 110, a wetted type calibrator 120, a water tank 130, an extracting device 140 and a cutting device 150.

The extruder 100 functions to heat and melt a raw mater injected through a hopper (referring to a reference numerical 2 of Fig. 1) in a heating cylinder having a heater and also to extrude the melted material to the extrusion die 110 through rotation of a screw.

The gel-state material supplied through the extruder 100 is formed into a desired shape by using the extrusion die 110.

The wetted type calibrator 120 functions to form a profile shape of the product passed through the extrusion die 110 and also to form the product having a precise dimension and shape (which will be fully described later).

The product passed through the wetted type calibrator 120 is cooled through the water tank 130, pulled by constant foce generated by the extracting device 140, and then cut into a desired size by the cutting device 150.

Meanwhile, as shown in Figs. 6 to 10, the wetted type calibrator 120 of the present invention includes a housing 122 and a calibrator assembly 124.

As shown in Figs. 5 and 6, the housing 122 accommodates a desired amount of cooling water in order to cool the material supplied through the extruder 100.

That is, a vacuum valve 122a for sucking exteranl air is disposed at an upper center portion of the housing 122, and a cooling water supply valve 122b and a cooling water discharge valve 122c are disposed at an upper side of the housing 122 so that the vacuum valve 122a is diposed therebetween. In Fig. 5, a reference numeral 122d is a valve pipe, and 112e is a pressure gauge.

The calibrator assembly 124 is disposed in the housing 122 so that the extruded product is passed therethrough. As shown in Figs. 6 to 10, the calibrator assembly 124 includes first and second assemblies 124a and 124b.

The first and second assemblies 124a and 124b has the same structure in which multiple disk parts 126 (e.g., 15 disk parts) are assembled (referring to Figs. 9 and 10). As shown in Fig. 11, the disk part 126 includes a lower disk 126b, a lower extrudion piece 126e, a connection member 126c, an upper extrusion piece 126d and an upper disk 126a which are stacked in turn and coupled with each other by a bolt 126f, and fifteen disk parts 126 are coupled with each other by another bolt 126g so as to form one assembly. As shown in Fig. 6, the first and second assemblies 124a and 124b are disposed in the housing 122.

A width W and a height H of the disk part 126 are dependent on a shape of the extruded product, and a thickness T thereof is 15mm. According to the invention, 15 disk parts 126 are formed into one assembly whose thickness is therefore 5 X 15=225mm. The upper extruder 126d and the upper disk 126a are coupled with each other by yet another bolt 126h.

Herein, as shown in Fig. 11, a plurality of water discharge holes 126e-1 and 126d-1 are formed along a length of the upper extruder. The water discharge holes 126e-1 and 126d-1 function as cooling water passages so that the cooling water supplied through the cooling water supply valve 122b is passed the first and second assemblies 124a and 124b and then discharged along a circumference of the extruded product so as to cool the extruded product. The extruded product which is primarily cooled by the wetted calibrator 120 is secondarily cooled by the water tank 130, thereby increasing the cooling effect.

Meanwhile, as shown in Fig. 1, an opening portion 126i is formed among the lower extrusion piece 126e, the connection member 126c and the upper extrusion piece 126d so as to be corespondent to a cross section of the extruded product. The opening portion 126i is also correspondent to a cross section of the extrusion die 110.

Figs. 12 and 13 are CAE analysis spectrums for comparing cooling effect between the conventionanl dry calibrator and the wetted calibrator of the present invention.

Referring to Fig. 12, a longitudinal axis is temperature (°C), and a horizontal axis is an outlet port of the apparatus for manufacturing the window frame wherein #1 is informally correspondent to the extruder, #2 is correspondent to the extrusion die, #3 is the dry/wetted type calibrator and #4 is the water tank.

Herein, in case of the inner portion of the dry/wetted type calibrator, a change in temperature is not so great (dry type: 32°C and wetted type: 40°C), but in case of the outer portion (surface) thereof, the temperature is remarkably reduced from 138°C(dry type) to 92°C(wetted type). This is caused by that the conventional dry calibrator 13 uses the cooling way through conduction, which has low cooling efficiency, and the wetted type calibrator of the present invention uses the cooling way through a convection current so that the surface of the extruded product formed of synthetic resin and is cooled first by the cooling water received in the housing 122 and then the inner portion thereof is cooled later, whereby the temperaure of the surface of the extruded product is reduced by 40°C. Therefore, when the wetted type calibrator is used, the cooling efficiency is enhanced, and the extrusion linear speed is also increased from 2.5 m/min to 3.5 m/min.

Meanwhile, Fig. 13a shows a temperature distribution of a cross section of the extruded product passing through the conventional dry calibrator, and Fig. 13b shows a temperature distribution of a cross section of the extruded product passing through the wetted type calibrator of the present invention. According to the present invention, a high temperature part indicated by a red color is reduced over the whole area.

In other words, it is possible to increse the cooling effect by using an intensive cooling system according to the present invention.

While the present invention has been described with respect to the specific embodiments various changes and modifications may be made within the scope of the invention as defined in the appended claims.

## Claims

1. A wetted type calibrator (120) for manufacturing a window frame, comprising:
a housing (122) which accommodates a desired amount of water therein; and
a calibrator assembly (124) which is disposed in the housing so that an extruded product formed of a synthetic resin material is passed therethrough,
**characterized in that** the calibrator assembly (124) comprises first and second assemblies (124a, 124b) respectively having fifteen assembled disk parts (126),
wherein the disk part (126) includes a lower disk (126b), a lower extrusion piece (126e), a connection member (126c), an upper extrusion piece (126d) and an upper disk (126a) which are coupled in turn with each other, and
wherein a thickness of the disk part is 15mm.

2. The wetted type calibrator according to claim 1, wherein the housing (122) comprises a vacuum valve (122a) for sucking external air; and cooling water supply and discharge valves (122b, 122c).

3. The wetted type calibrator according to claim 1, wherein a plurality of water discharge holes (126e-1, 126d-1) are formed along a length of the lower extrusion piece (126e) and the upper extrusion piece (126d).

4. The wetted type calibrator according to claim 1, wherein an opening portion is formed among the lower extrusion piece (126e), the connection members (126c) and the upper extrusion piece (126d) so as to be correspondent to a cross section of the extruded product.

5. An apparatus for manufacturing a window frame, comprising:
an extruder (100) in which a raw mater injected through a hopper is heated and melted and then the melted material is extruded by rotation of a screw;
an extrusion die (110) by which the gel-state material supplied through the extruder (100) is formed into a desired shape;
a wetted type calibrator (120) which forms a profile shape of the product passed through the extrusion die and also forms the product having a precise dimension and shape;
a water tank (130) which cools the extruded product passed through the wetted type calibrator (120);
an extracting device (140) which pulls the extruded product passed through the water tank with constant force; and
a cutting device (150) which cuts the extruded product in a desired size,
wherein the wetted type calibrator (120) is the wetted type calibrator (124) of claim 1.

6. The apparatus according to claim 5, wherein the housing (122) comprises a vacuum valve (122a) for sucking external air; and cooling water supply and discharge valves (122b, 122c).

7. The apparatus according to claim 5, wherein a plurality of water discharge holes (126e-1, 126d-1) are formed along a length of the lower extrusion piece (126e) and the upper extrusion piece (126d).

8. The apparatus according to claim 5, wherein an opening portion is formed among the lower extrusion piece (126e), the connection members (126c) and the upper extrusion piece 126d so as to be correspondent to a cross section of the extruded product.

## Patentansprüche

1. Flüssigkeitsbenetzter Kalibrator (120) zur Herstellung eines Fensterrahmens, umfassend:
Ein Gehäuse (122), das eine gewünschte Wassermenge darin aufnimmt; und
eine Kalibratorbaugruppe (124), die im Gehäuse angeordnet ist, sodass ein extrudiertes Produkt, das aus einem Kunstharz geformt ist, dort hindurch geleitet wird,
**dadurch gekennzeichnet, dass** die Kalibratorbaugruppe (124) erste und zweite Baugruppen (124a, 124b) umfasst, die jeweils fünfzehn zusammengebaute Scheibenteile (126) aufweisen,
wobei das Scheibenteil (126) eine untere Scheibe (126b), ein unteres Extrusionsteil (126e), ein Verbindungselement (126c), ein oberes Extrusionsteil (126d) und eine obere Scheibe (126a) einschließt, die der Reihe nach miteinander gekoppelt sind, und
wobei eine Dicke des Scheibenteils 15 mm beträgt.

2. Flüssigkeitsbenetzter Kalibrator nach Anspruch 1, wobei das Gehäuse (122) ein Vakuumventil (122a) zum Ansaugen von Außenluft; und Zufuhr- und Ablassventile für Kühlwasser (122b, 122c) umfasst.

3. Flüssigkeitsbenetzter Kalibrator nach Anspruch 1, wobei eine Vielzahl von Wasserablasslöchern (126e-1, 126d-1) entlang einer Länge des unteren Extrusionsteils (126e) und des oberen Extrusionsteils (126d) geformt ist.

4. Flüssigkeitsbenetzter Kalibrator nach Anspruch 1, wobei ein Öffnungsabschnitt inmitten des unteren Extrusionsteils (126e), des Verbindungselements (126c) und des oberen Extrusionsteils (126d) geformt ist, um einem Querschnitt des extrudierten Produkts zu entsprechen.

5. Vorrichtung zur Herstellung eines Fensterrahmens, umfassend:
Einen Extruder (100), in welchem ein durch einen Trichter injiziertes Rohmaterial erhitzt und geschmolzen wird und danach das geschmolzene Material durch Rotation einer Schraube extrudiert wird;
eine Extrusionsdüse (110) durch die das gelartige durch den Extruder (100) geförderte Material in eine gewünschte Form geformt wird;
einen flüssigkeitsbenetzten Kalibrator (120), der eine Profilform des durch die Extrusionsdüse geleiteten Produkts formt und außerdem das Produkt formt, das eine präzise Abmessung und Form aufweist;
einen Wasserbehälter (130), der das dir den flüssigkeitsbenetzten Kalibrator (120) geleitete extrudierte Produkt kühlt;
eine Abzugsvorrichtung (140), die das extrudierte Produkt mit einer konstanten Kraft durch den Wasserbehälter zieht; und
eine Schneidvorrichtung (150), die das extrudierte Produkt in eine gewünschte Größe schneidet,
wobei der flüssigkeitsbenetzte Kalibrator (120) der flüssigkeitsbenetzte Kalibrator (124) nach Anspruch 1 ist.

6. Vorrichtung nach Anspruch 5, wobei das Gehäuse (122) ein Vakuumventil (122a) zum Ansaugen von Außenluft; und Zufuhr- und Ablassventile für Kühlwasser (122b, 122c) umfasst.

7. Vorrichtung nach Anspruch 5, wobei eine Vielzahl von Wasserablasslöchern (126e-1, 126d-1) entlang einer Länge des unteren Extrusionsteils (126e) und des oberen Extrusionsteils (126d) geformt ist.

8. Vorrichtung nach Anspruch 5, wobei ein Öffnungsabschnitt inmitten des unteren Extrusionsteils (126e), des Verbindungselements (126c) und des oberen Extrusionsteils 126d geformt ist, um einem Querschnitt des extrudierten Produkts zu entsprechen.

## Revendications

1. Un étalonneur de type humide (120) permettant de fabriquer un cadre de fenêtre et composé des éléments suivants :
un carter (122) qui contient le volume souhaité d'eau et
un ensemble étalonneur (124) qui est implanté dans le carter et qui y permet l'insertion d'un produit extrudé en matériau à base de résine synthétique,
qui se **caractérise par le fait que** l'ensemble étalonneur (124) se compose d'un premier ensemble (124a) et d'un deuxième ensemble (124b) et que chacun de ces deux ensembles a quinze pièces assemblées en forme de disque (126)
et chaque pièce en forme de disque (126) se compose d'un disque inférieur (126b), d'une extrusion inférieure (126e), d'un élément de raccordement (126c), d'une extrusion supérieure (126d) et d'un disque supérieur (126a) et tous ces éléments sont accouplés, l'un après l'autre, les uns aux autres et
chaque pièce en forme de disque a une épaisseur de 15 mm.

2. L'étalonneur de type humide qui est décrit dans la revendication 1, si ce n'est que le carter (122) se compose d'un clapet sous vide (122a) qui aspire l'air venant de l'extérieur et de clapets d'alimentation et décharge pour l'eau de refroidissement (122b, 122c).

3. L'étalonneur de type humide qui est décrit dans la revendication 1, si ce n'est qu'une pluralité de trous de décharge d'eau (126e-1, 126d-1) sont prévus sur toute une longueur de l'extrusion inférieure (126e) et de l'extrusion supérieure (126d).

4. L'étalonneur de type humide qui est décrit dans la revendication 1, si ce n'est qu'une partie qui s'ouvre est formée à partir de l'extrusion inférieure (126e), des éléments de raccordement (126c) et de l'extrusion supérieure (126d) afin d'obtenir une correspondance avec une coupe du produit extrudé.

5. Un dispositif de fabrication d'un cadre de fenêtre composé des éléments suivants :
une extrudeuse (100) dans laquelle une matière première injectée par le biais d'une trémie est chauffée puis mise en fusion et le matériau ainsi en fusion subit une extrusion obtenue par rotation d'une vis ;
une matrice d'extrusion (110) dans laquelle le matériau à l'état de pâte fourni par l'extrusion (100) fait l'objet d'une mise en forme qui lui donne le profil souhaité ;
un étalonneur de type humide (120) qui met en forme un élément profilé à partir du produit qui a traversé la matrice d'extrusion et met également en forme ce produit en respectant des dimensions bien précises et un profil spécifique ;.
un réservoir d'eau (130) qui refroidit le produit extrudé qui a traversé l'étalonneur de type humide (120) ;
un dispositif d'extraction (140) qui tire sur le produit extrudé qui a traversé le réservoir d'eau, en exerçant une force constante et
un dispositif de tranchage (150) qui découpe le produit extrudé en fonction des dimensions souhaitées
et l'étalonneur de type humide (120) est l'étalonneur de type humide (124) décrit dans la réclamation 1.

6. Le dispositif qui est décrit dans la revendication 5, si ce n'est que le carter (122) se compose d'un clapet sous vide (122a) qui aspire l'air venant de l'extérieur et de clapets d'alimentation et décharge pour l'eau de refroidissement (122b, 122c).

7. Le dispositif qui est décrit dans la revendication 5, si ce n'est qu'une pluralité de trous de décharge d'eau (126e-1, 126d-1) sont prévus sur toute une longueur de l'extrusion inférieure (126e) et de l'extrusion supérieure (126d).

8. Le dispositif qui est décrit dans la revendication 5, si ce n'est qu'une partie qui s'ouvre est formée à partir de l'extrusion inférieure (126e), des éléments de raccordement (126c) et de l'extrusion supérieure (126d) afin d'obtenir une correspondance avec une coupe du produit extrudé.
